# EUROPEAN PATENT APPLICATION

(11) **EP 4 840 614 A2**
(43) Date of publication of application: **18.11.2026**
(21) Application number: 26206018.9
(22) Date of filing: 20.10.2023
(51) Int. Cl.: B29C 51/26

(54) **MOLDING APPARATUS AND METHOD, AND POUCH TYPE BATTERY CASE MOLDED THERETHROUGH**

(30) Priority: 27.10.2022 KR 20220140761
(62) Document number(s) of the earlier application(s) in accordance with Art. 76 EPC: 23883017.8 / 4 603 253
(71) Applicant: LG Energy Solution, Ltd., Seoul 07335 (KR)
(72) Inventor: LEE, Chung Hee, 34122 Daejeon (KR); KANG, Tae Won, 34122 Daejeon (KR); HONG, Jeong Woo, 34122 Daejeon (KR); CHO, Sung Wook, 34122 Daejeon (KR)
(74) Representative: Plasseraud IP

(57) **Abstract**

A molding apparatus according to an embodiment of the present invention may mold a cup part in a pouch film. A molding apparatus may include: a die in which a first opening is defined; a stripper disposed to fix the pouch film, above the die and having a second opening at a position corresponding to the first opening; an upper punch configured to press the pouch film through the second opening; and a lower punch configured to press the pouch film through the first opening between an outer circumference of the upper punch and an inner circumference of the second opening.

## Description

### TECHNICAL FIELD

### CROSS-REFERENCE TO RELATED APPLICATION

The present application claims the benefit of the priority of Korean Patent Application No. 10-2022-0140761, filed on October 27, 2022, which is hereby incorporated by reference in its entirety.

### TECHNICAL FIELD

The present invention relates to a molding apparatus and method for molding a pouch film, and a pouch-type battery case molded therethrough.

### BACKGROUND ART

In general, secondary batteries include nickelcadmium batteries, nickel-hydrogen batteries, lithium ion batteries, and lithium ion polymer batteries. Such a secondary battery is being applied to be used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the secondary battery, first, electrode active material slurry is applied to a positive electrode collector and a negative electrode collector to manufacture a positive electrode and a negative electrode. Then, the electrodes are stacked on both sides of a separator to form an electrode assembly. Also, the electrode assembly is accommodated in a battery case, and then the battery case is sealed after an electrolyte is injected therein.

Such a secondary battery is classified into a pouch-type secondary battery and a can-type secondary battery according to a material of a case accommodating the electrode assembly. In the pouch-type secondary battery, an electrode assembly is accommodated in a pouch made of a flexible polymer material. Also, in the can-type secondary battery, an electrode assembly is accommodated in a case made of a metal or plastic material.

In general, a pouch-type battery case is manufactured by performing press processing on a pouch film having flexibility to form a cup part. In addition, when the cup part is formed, an electrode assembly is accommodated in the cup part, and then, a side of the cup part is sealed to manufacture a secondary battery.

In general, in the press processing, drawing molding is performed by inserting a pouch film between a die and a stripper and applying a pressure to the pouch film by using a punch to stretch the pouch film.

However, in the method according to the related art, when the cup part is molded, there is a risk of cracks occurring in the pouch film, and there is a limitation in that a depth of the cup part increases.

### DISCLOSURE OF THE INVENTION

### TECHNICAL PROBLEM

An object of the present invention is to provide a molding apparatus and method, which are capable of deeply molding a cup part in a pouch film by dividing the molding process into multiple times.

Another object of the present invention is to provide a pouch type battery case that is manufactured through the molding apparatus or method.

### TECHNICAL SOLUTION

A molding apparatus according to an embodiment of the present invention may mold a cup part in a pouch film. The molding apparatus may include: a die in which a first opening is defined; a stripper disposed to fix the pouch film, above the die and having a second opening at a position corresponding to the first opening; an upper punch configured to press the pouch film through the second opening; and a lower punch configured to press the pouch film through the first opening between an outer circumference of the upper punch and an inner circumference of the second opening.

The lower punch may be configured to primarily press the pouch film in a state in which the upper punch is disposed in the second opening, and the upper punch may be configured to secondarily press the pouch film in a state in which the lower punch is separated from the first opening.

The upper punch may be configured to press the pouch film to a depth at which the upper punch protrudes downward from the first opening.

A top surface of the lower punch may be provided to be convex.

A molding method according to an embodiment of the present invention may mold a cup part in a pouch film. The molding method for molding a cup part in a pouch film may include: fixing the pouch film between a die, in which a first opening is formed, and a stripper, in which a second opening is formed; allowing a lower punch to primarily press the pouch film through the first opening between an outer circumference of an upper punch and an inner circumference of the second opening; and allowing the upper punch to secondarily press the pouch film downward through the second opening.

In the primary pressing, the lower punch may be inserted from the first opening into the second opening.

In the secondary pressing, the lower punch may be separated from the first opening.

In the secondary pressing, the upper punch may be inserted from the second opening into the first opening.

A pouch type battery case according to an embodiment of the present invention may include: a cup part having a recessed shape; and a terrace disposed on a circumference of the cup part. A circumferential portion of the cup part may include: a first circumferential portion connected to the terrace through a die edge; a second circumferential portion connected to the first circumferential portion and having a thickness less than that of the first circumferential portion; and a third circumferential portion connected to the second circumferential portion, connected to a base portion of the cup part through a punch edge, and having a thickness greater than that of the second circumferential portion.

The thickness of the first circumferential portion may correspond to the thickness of the third circumferential portion and/or a thickness of the die edge.

The thickness of the second circumferential portion and a thickness of the punch edge may correspond to each other.

The thickness of the second circumferential portion may be less than that of the die edge.

### ADVANTAGEOUS EFFECTS

According to the preferred embodiment of the present invention, the deep cup part may be molded without the cracks occurring in the pouch film. In more detail, according to the related art, since the cup part is molded by the pressing once, only the specific area of the pouch film may be excessively stretched, and thus, the depth of the cup part may be limited to prevent the cracks from occurring. On the other hand, in the present invention, since the molding process is performed several times so that the area of the pouch film, which is not stretched in the related art, is also stretched, there may be the advantage in that the cup part is molded more deeply.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a schematic view of a molding apparatus according to an embodiment of the present invention.
FIGS. 2 to 5 are schematic view successively illustrating operations of the molding apparatus according to an embodiment of the present invention.
FIG. 6 is a flowchart of a molding method according to another embodiment of the present invention.
FIG. 7 is a schematic view illustrating a process of molding a pouch type battery case according to further another embodiment of the present invention.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

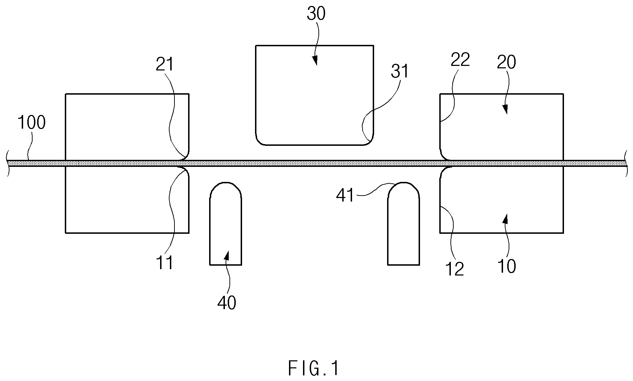

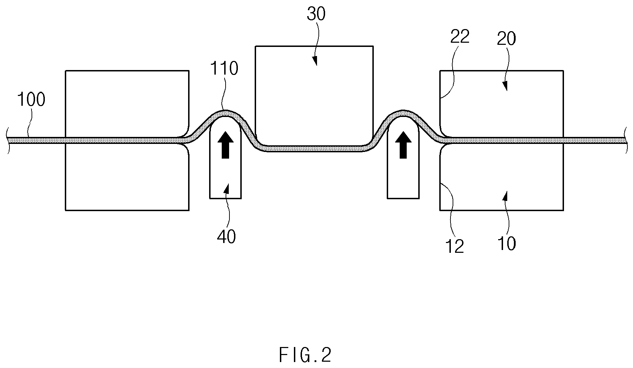

FIG. 1 is a schematic view of a molding apparatus according to an embodiment of the present invention, and FIGS. 2 to 5 are schematic view successively illustrating operations of the molding apparatus according to an embodiment of the present invention.

The molding apparatus according to an embodiment of the present invention may mold a pouch film 100. The pouch film 100 may have a predetermined thickness. The pouch film 100 may be a laminated sheet having moldability. In more detail, the pouch film 100 may be a laminated sheet in which a pair of resin layers disposed at both the outermost surfaces and a metal layer disposed between the pair of resin layers are laminated.

The molding apparatus according to an embodiment of the present invention may include a die 10, a stripper 20, an upper punch 30, and a lower punch 40.

Some of the die 10, the stripper 20, the upper punch 30, and the lower punch 30 may be configured to be elevated with respect to other parts. For example, any one of the die 10, the stripper 20, the upper punch 30, and the lower punch 40 may be fixed, and the others may be configured to be independently elevated with respect to the any one. As another example, each of the die 10, the stripper 20, the upper punch 30, and the lower punch 40 may be configured to be independently elevated.

The die 10 may be disposed below the pouch film 100. A first opening 12 may be defined in the die 10. The first opening 12 may be defined downward from a top surface of the die 10. The first opening 12 may be a molding space in which the pouch film 100 is recessed. In addition, the first opening 12 may be a space in which the lower punch 40, which will be described later, is disposed.

A cross-section of the first opening 12 may have an approximately square shape, but is not limited thereto.

A rounded edge 11 may be defined on the die 10. In more detail, the top surface of the die 10 and an inner circumference of the first opening 12 may be connected to each other by the rounded edge 11. The edge 11 may have a predetermined curvature radius. The edge 11 may be provided to be rounded to prevent a portion that is in close contact with the edge 11 from being broken when the pouch film 100 is stretched into the first opening 12.

The stripper 20 may face the die 10 with the pouch film 100 therebetween. The stripper 20 may fix the pouch film 100 at an upper side of the die 10.

In more detail, at least one of the die 10 or the stripper 20 may be configured to be elevated, and a gap between the die 10 and the stripper 20 may be variable. The pouch film 100 may be inserted between the die 10 and the stripper 20 when the die 10 and the stripper 20 are spaced apart from each other, and then, when the die 10 and the stripper 20 approach each other, the pouch film 100 may be fixed between the die 10 and the stripper 20. That is, the pouch film 100 may be fixed between the top surface of the die 10 and a bottom surface of the stripper 20.

A second opening 22 may be defined in the stripper 20. The second opening 22 may be defined to pass upward from the bottom surface of the stripper 20. The second opening 22 may be a space in which the upper punch 30, which will be described later, is disposed.

A cross-section of the second opening 22 may have an approximately square shape, but is not limited thereto. The second opening 22 may be disposed above the first opening 12. The second opening 22 and the first opening 12 may face each other with the pouch film 100 therebetween.

A rounded edge 21 may be disposed on the stripper 20. In more detail, the bottom surface of the stripper 20 and an inner circumference of the second opening 22 may be connected to each other by the rounded edge 21. The edge 21 may have a predetermined curvature radius. The edge 21 may be provided to be rounded to prevent a portion that is in close contact with the edge 21 from being broken when the pouch film 100 is stretched into the second opening 22.

The upper punch 30 may press the pouch film 100 through the second opening 22.

A height of the upper punch 30 relative to the die 10 within the second opening 22 may be variable. In more detail, at least one of the die 10 or the upper punch 30 may be configured to be elevated, and a height difference between the top surface of the die 10 and the bottom surface of the upper punch 30 may be variable.

A rounded edge 31 may be disposed on the upper punch 30. In more detail, the top surface and the outer circumference of the upper punch 30 may be connected to each other by the rounded edge 31. The edge 31 may have a predetermined curvature radius. The edge 31 may be provided to be rounded to prevent a portion that is in close contact with the edge 31 from being broken when the pouch film 100 is stretched into the first opening 12.

The lower punch 40 may press the pouch film 100 between the outer circumference of the upper punch 30 and the inner circumference of the second opening 22 through the first opening 12. The lower punch 40 may be disposed to face a space between the outer circumference of the upper punch 30 and the inner circumference of the second opening 22 with the pouch film 100 therebetween.

A height of the lower punch 40 relative to the die 10 within the first opening 12 may be variable. In more detail, at least one of the die 10 or the lower punch 40 may be configured to be elevated, and a height difference between the top surface of the die 10 and the top surface of the lower punch 40 may be variable.

A top surface of the lower punch 40 may be rounded. The top surface 41 of the lower punch 40 may have a predetermined curvature radius. The top surface 41 of the lower punch 40 may be provided to be convex. As a result, a portion of the pouch film 100, which is in close contact with the top surface 41 of the lower punch 40 when the lower punch 40 presses the pouch film 100 may be prevented from being broken. However, it is not limited thereto, and the top surface 41 of the lower punch 40 may be provided to be flat to connect an outer circumference and an inner circumference of the lower punch 40 to each other through a rounded edge.

Referring to FIG. 2, in the primary molding of allowing the lower punch 40 to press the pouch film 100, the lower punch 40 may protrude upward from a top surface of the die 10. Here, the upper punch 30 may be disposed in the second opening 22. In more detail, a bottom surface of the upper punch 30 may be disposed on the same horizontal plane as a bottom surface of the stripper 20.

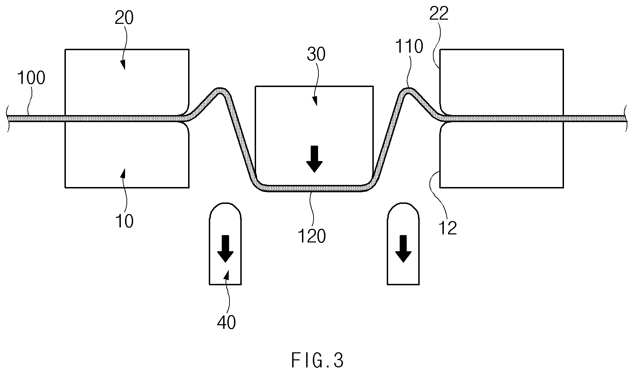

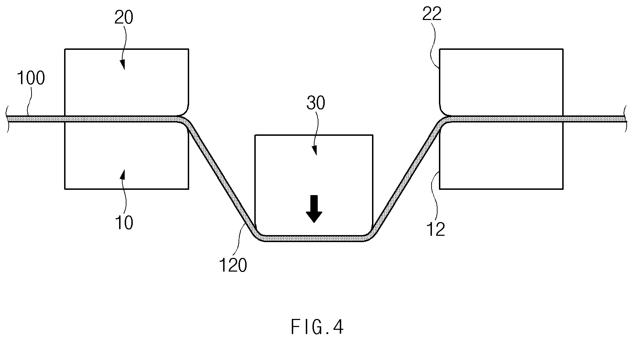

Referring to FIGS. 3 and 4, in the secondary molding of allowing the upper punch 30 to press the pouch film 100, the lower punch 40 may be separated from the first opening 12. Thus, the upper punch 30 may sufficiently press the pouch film 100 downward without an interference between the pouch film 100 and the lower punch 40. In more detail, the upper punch 30 may press the pouch film 100 to a depth that protrudes downward from the first opening 12.

Hereinafter, the operation of the molding apparatus according to an embodiment of the present invention will be described. In addition, for convenience of explanation, hereinafter, a case in which the die 10 is fixed, and each of the stripper 20, the upper punch 30, and the lower punch 40 is elevated independently will be described as an example.

Referring to FIG. 1, in a state in which the pouch film 100 enters between the die 10 and the stripper 20, the stripper 20 descends toward the die 10, and a portion of the outside of the pouch film 100 may be fixed between the stripper 20 and the die 10.

Referring to FIG. 2, the upper punch 30 may be aligned so that the bottom surface thereof is disposed on the same plane as the bottom surface of the stripper 20. In such a state, the lower punch 40 may ascend from the first opening 12 into the second opening 22 to press the pouch film 100 between the outer circumference of the upper punch 30 and an inner circumference of the second opening 22. Thus, a portion of the pouch film 100, which is fixed between the die 10 and the stripper 20, and a portion of the pouch film, which is in contact with the upper punch 30, may be maintained to be flat, and the portion of the pouch film 100, which is pressed by the lower punch 40, may be stretched. This may be called the primary molding, and a protrusion 110 may be disposed on the pouch film 100 through the primary molding.

Thereafter, referring to FIGS. 3 and 4, the lower punch 40 may descend from the first opening 12. In more detail, the lower punch 40 may descend to be separated from the first opening 12. In addition, the upper punch 30 may descend from the second opening 22 into the first opening 12 to press the pouch film 100 downward. This may be referred to as the secondary molding, and the protrusion 110 that is previously molded in the pouch film 100 may be spread through the secondary molding to mold the cup part 120. The cup part 120 may be recessed in a direction opposite to a direction in which the protrusion 110 protrudes.

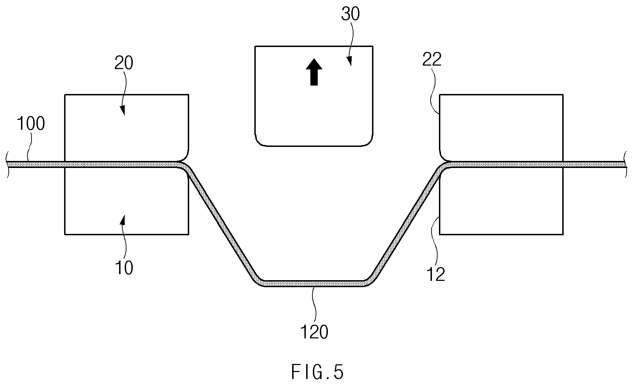

Thereafter, referring to FIG. 5, the upper punch 40 may ascend to return to its initial position. In addition, the stripper 20 may also ascend, and the pouch film 100 fixed between the die 10 and the stripper 20 may be released.

Due to this series of processes, the molding of the cup part 120 on the pouch film 100 may be completed. In the related art, the cup part is molded by the pressing once, but in this case, only a specific area of the pouch film is excessively stretched, and thus, the depth of the cup part is limited to prevent cracks from occurring. On the other hand, in the present invention, since the pouch film 100 is molded multiple times so that the area of the pouch film, which is not stretched in the related art, is stretched, there is an advantage in that the cup part 120 is more deeply molded.

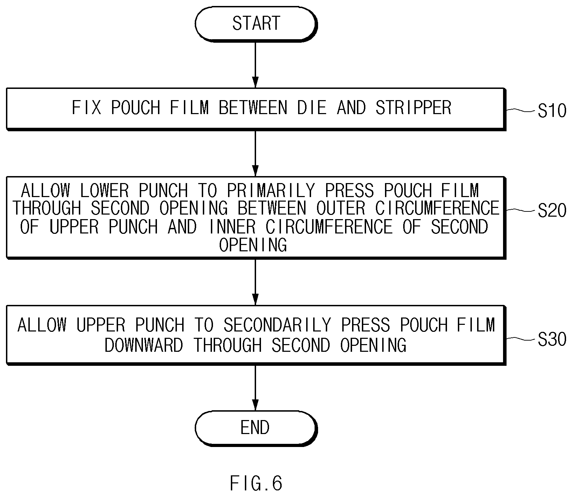

FIG. 6 is a flowchart of a molding method according to another embodiment of the present invention.

Hereinafter, a molding method for molding a pouch film 100 using the molding apparatus described above will be described as another embodiment of the present invention.

The molding method according to another embodiment of the present invention may include a process (S10) of fixing the pouch film 100 between a die 10 and a stripper 20 (hereinafter, referred to as a 'fixing process'), a process (S20) of allowing a lower punch 40 to primarily press the pouch film 100 between an outer circumference of an upper punch 30 and an inner circumference of a second opening 22 (hereinafter, referred to as a 'primary molding process'), and a process (S30) of allowing the upper punch 30 to secondarily press the pouch film 100 (hereinafter, referred to as a 'secondary molding process').

In each of the processes (S10, S20, and S30), the previous description of the operation of the molding apparatus may be cited. In more detail, the fixing process (S10) may cite the content described with reference to FIG. 1, the primarily molding process (S20) may cite the content described with reference to FIG. 2, and the secondary molding process (S30) may cite the content described with reference to FIGS. 3 to 5. Hereinafter, main features will be briefly described.

In the fixing process (S10), the pouch film 100 may be fixed between the top surface of the die 10 and a bottom surface of the stripper 20.

In the primarily molding process (S20), the lower punch 40 may press the pouch film 100 and may be inserted from the first opening 12 into the second opening 22. In more detail, the lower punch 40 may be inserted between the inner circumference of the second opening 22 and the outer circumference of the upper punch 30. Thus, the lower punch 40 may mold the protrusion 110 on the pouch film 100.

In the second molding process (S30), the upper punch 30 may press the pouch film 100 and be inserted from the second opening 22 into the first opening 12. In more detail, the upper punch 30 may press a central portion of the pouch film 100 downward to spread the protrusion 110 and mold the cup part 120.

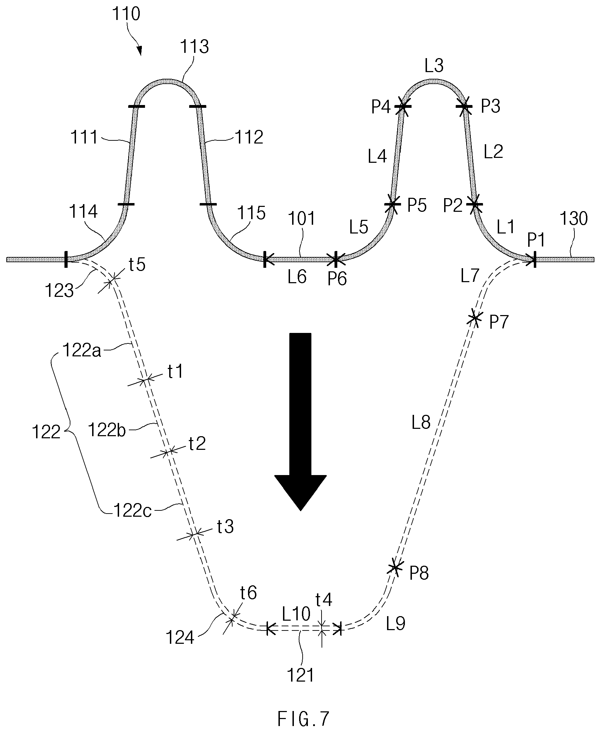

FIG. 7 is a schematic view illustrating a process of molding a pouch type battery case according to further another embodiment of the present invention.

Hereinafter, a pouch type battery case manufactured by the molding apparatus or molding method described above will be described as another embodiment of the present invention.

A pouch type battery case (hereinafter, 'battery case') according to another embodiment of the present invention may include a cup part 120 having a recessed shape and a terrace 130 disposed around the cup part 120.

The cup part 120 may define a space for accommodating an electrode assembly (not shown). The terrace 130 may be a portion of the pouch film 100, which is fixed between a die 10 and a stripper 20 and in which the cup part 120 is not molded.

In a process of manufacturing the battery case, the protrusion 110 may be molded primarily, the protrusion 110 may be spread, and the cup part 120 recessed in the direction opposite to the protrusion 110 may be molded secondarily.

The protrusion 110 may include an outer circumferential portion 111, an inner circumferential portion 112, and a connection portion 113.

The outer circumferential portion 111 may be connected to the terrace 130 through a stripper edge 114. The stripper edge 114 may be formed to be rounded. In more detail, the stripper edge 114 may have a predetermined curvature radius. The stripper edge 114 may be formed by an edge 21 of the stripper 20 (see FIG. 1) and may have a radius curvature corresponding to that of the edge 21 of the stripper 20.

The inner circumferential portion 112 may be connected to a central portion 101 through a connection edge 115. The central portion 101 may be a portion in which the protrusion 110 is not formed by being supported by the upper punch 30 in the primary molding of the pouch film 100.

The connection edge 115 may be a portion pressed by the upper punch 30. In more detail, a portion that is in contact with the edge 31 of the upper punch 30 (see FIG. 1) may be stretched to the connection edge 115 by relative movement of the lower punch 40 with respect to the upper punch 30. The connection edge 115 may be formed to be rounded. The connection edge 115 may have a curvature radius corresponding to that of the edge 31 of the upper punch 30.

The connection portion 113 may connect the outer circumferential portion 111 to the inner circumferential portion 112. The connection portion 113 may have a shape corresponding to that of the top surface 41 of the lower punch 40. The connection portion 113 may have a predetermined curvature radius. The connection portion 113 may be formed to be convex upward.

In the primary molding of the pouch film 100, the terrace 130 and the central portion 101 may not be stretched or be slightly stretched so a remaining thickness thereof is thick.

Since the connection portion 113 is directly pressed by the lower punch 40, the connection portion 113 may be relatively stretched, and its remaining thickness may be thin. Similarly, since the connection edge 115 is directly pressed by the upper punch 30, the connection portion 113 may be relatively stretched, and its remaining thickness may be thin. The connection portion 113 and the connection edge 115 may be stretched to the same or similar degree. Thus, the remaining thicknesses of the connection portion 113 and the connection edge 115 in the protrusion 110 may be the same or similar.

In addition, the outer circumferential portion 111 and the inner circumferential portion 112 may be stretched relatively less than each of the connection portion 113 and the connection edge 115. The stripper edge 114 may also be stretched to the same or similar degree as each of the outer circumferential portion 111 and the inner circumferential portion 112. Thus, the remaining thicknesses of the outer circumferential portion 111, the inner circumferential portion 112, and the stripper edge 114 in the protrusion 110 may be the same or similar.

That is, the thickness of each of the outer circumferential portion 111, the inner circumferential portion 112, and the stripper edge 114 may be greater than that of each of the connection portion 113 and the connection edge 115 and may be less than that of each of the terrace 130 and the central portion 101.

In the secondary molding of the pouch film 100, the stripper edge 114 and the outer circumferential portion 111 of the protruding portion 110 may form a die edge 123 of the cup part 122 and a first circumferential portion 122a that is a portion of the circumferential portion 122 of the cup part 120. The connection portion 113 of the protrusion 110 may form a second circumferential portion 122b, which is the other portion of the circumferential portion 122 of the cup part 120. The inner circumferential portion 112 of the protrusion 110 may form a third circumferential portion 122c, which is another portion of the circumferential portion 122 of the cup part 120. The connection edge 115 and the central portion 101 of the protrusion 110 may form a punch edge 124 and a base portion 121 of the cup part 120.

Thus, based on a cross-sectional view as illustrated in FIG. 7, when, in the protrusion 110, a length of the stripper edge 114 is L1, a length of the outer circumferential portion 111 is L2, a length of the connection portion 113 is L3, a length of the inner circumferential portion is L4, a length of the connection edge 115 is L5, and a length of the central portion 101 is L6, and in the cup part 120, a length of the die edge 123 is L7, a length of the circumferential portion 122 is L7, a length of the punch edge is L9, and a length of the base portion is L10, the following conditional expression: 2*(L1+L2+L3+L4+L5)+L6 = 2*(L7+L8+L9)+L10 may be satisfied.

However, it is not limited thereto, and if the upper punch 30 further stretches the cup part 120, the following conditional expression: 2*(L1+L2+L3+L4+L5)+L6 < 2*(L7+L8+L9)+L10 may be satisfied.

The reference symbol L1 that is the length of the stripper edge 114 may refer to a length from a boundary P1 between the terrace 130 and the stripper edge 114 to a boundary P2 between the stripper edge 114 and the outer circumferential portion 111. The reference symbol L2 that is the length of the outer circumferential portion 111 may refer to a length from the boundary P2 between the stripper edge 114 and the outer circumferential portion 111 to a boundary P3 between the outer circumferential portion 111 and the connection portion 113. The reference symbol L3 that is the length of the connection portion 113 may refer to a length from the boundary P3 between the outer circumferential portion 111 and the connection portion 113 to a boundary P4 between the connection portion 113 and the inner circumferential portion 112. The reference symbol L4 that is the length of the inner circumferential portion 112 may refer to a length from the boundary P4 between the connection portion 113 and the inner circumferential portion 112 to a boundary P5 between the inner circumferential portion 112 and the connection edge 115. The reference symbol L5 that is the length of the connection edge 115 may refer to a length from the boundary P5 between the inner circumferential portion 112 and the connection edge 115 to a boundary P6 between the connection edge 115 and the central portion 101. The reference symbol L6 that is the length of the central portion 101 may refer to a length between boundaries P6 between both the connection edges 115 and the central portion 101.

The reference symbol L7 that is the length of the die edge 123 may refer to a length from the boundary P1 between the terrace 130 and the die edge 123 to a boundary P7 between the die edge 123 and the circumferential portion 122. The reference symbol L8 that is the length of the circumferential portion 122 may refer to a length from the boundary P7 between the die edge 123 and the circumferential portion 122 to a boundary P8 between the circumferential portion 122 and the punch edge 124. The reference symbol L9 that is the length of the punch edge 124 may refer to a distance from the boundary P8 between the second circumferential portion 122b and the punch edge 124 to a boundary P9 between the punch edge 124 and the base portion 121. The reference symbol L10 that is the length of the base portion 121 may refer to a length between boundaries P9 between both the punch edges 124 and the base portion 121.

Since the protrusion 110 is spread to form the cup 120, a thickness of each portion of the cup 120 may be different from that of the cup part formed in a conventional manner. Hereinafter, the cup part 120 will be described.

The cup part 120 may include a base portion 121 and a circumferential portion 122.

The circumferential portion 122 of the cup part 120 may be connected to the terrace 130 and the die edge 111. The die edge 123 may be formed to be round. In more detail, the die edge 123 may have a predetermined curvature radius. The die edge 123 may be formed by an edge 11 of the die 10 (see FIG. 1) and may have a radius curvature corresponding to that of the edge 11 of the die 10.

The base portion 121 of the cup part 120 may be connected to the circumferential portion 122 and the punch edge 124. The punch edge 124 may be formed to be rounded. In more detail, the punch edge 124 may have a predetermined curvature radius. The punch edge 124 may be formed by the edge 31 of the upper punch 30 (see FIG. 1) and may have a curvature radius corresponding to that of the edge 31 of the upper punch 30. The punch edge 124 may be a portion corresponding to the connection edge 115 formed during the molding of the above-described protrusion 110.

The circumferential portion 122 of the cup part 120 may include a first circumferential portion 122a connected to the terrace 130 and the die edge 123, a second circumferential portion 122b connected to the first circumferential portion 122a and having a thickness less than that of the first circumferential portion 122a, and a third circumferential portion 122c connected to the second circumferential portion 122b, connected to the base portion 121 and the punch edge 124, and having a thickness greater than that of the second circumferential portion 122b.

The first circumferential portion 122a may correspond to the outer circumferential portion 112 of the protrusion 110, the second circumferential portion 122b may correspond to the connection portion 113 of the protrusion 110, and the third circumferential portion 122c may correspond to the inner circumferential portion 112 of the protrusion 110. As described above, a remaining thickness of the connection portion 113 may be less than a remaining thickness of each of the outer circumferential portion 111 and the inner circumferential portion 112, and thus, a thickness t2 of the second circumferential portion 122b may be relatively less than each of a thickness t1 of the first circumferential portion 122a and a thickness t3 of the third circumferential portion 122c.

In addition, as described above, the remaining thicknesses of the outer circumferential portion 111, the inner circumferential portion 112, and the stripper edge 114 in the protrusion 110 may be the same as or similar to each other. Thus, the thickness t1 of the first circumferential portion 122a and the thickness t3 of the third circumferential portion 122c of the cup part 120 may be the same as or similar to each other, that is, may correspond to each other. In addition, the thickness t1 of the first circumferential portion 122a of the cup part 120 and a thickness t5 of the die edge 123 may correspond to each other. In addition, the thickness t2 of the second circumferential portion 122b of the cup part 120 may be less than the thickness t5 of the die edge 123.

In addition, as described above, the remaining thicknesses of the connection portion 113 and the connection edge 115 of the protrusion 110 may be the same as or similar to each other. Thus, the thickness t2 of the second circumferential portion 122b of the cup part 120 and a thickness t6 of the punch edge 124 may correspond to each other. In addition, the thickness t6 of the punch edge 124 may be less than the thickness t5 of the die edge 123, the thickness t1 of the first circumferential portion 122a, and the thickness t3 of the third circumferential portion 122c.

The base portion 121 of the cup part 120 may be a portion corresponding to the central portion 101 in the primary molding. As described above, the thickness of the central portion 101 may be relatively thick compared to each portion of the protrusion 110. Therefore, the thickness t4 of the base portion 121 of the cup 120 may be greater than each of the thicknesses t1, t2, and t3 of the first to third circumferential parts 122a, 122b, and 122c, the thickness t5 of the die edge 123, and the thickness t6 of the punch edge 124.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

**[Description of the Symbols]**

| | | | |
|---|---|---|---|
| 10: | Die | 12: | First opening |
| 20: | Stripper | 22: | Second opening |
| 30: | Upper punch | 40: | Lower punch |
| 100: | Pouch film | 101: | Central portion |
| 110: | Protrusion | 111: | Outer circumferential portion |
| 112: | Inner circumferential portion | 113: | Connection portion |
| 114: | Stripper edge | 115: | Connection edge |
| 120: | Cup part | 121: | Base portion |
| 122: | Circumferential portion | 122a: | First circumferential portion |
| 122b: | Second circumferential portion | 122c: | Third circumferential portion |
| 123: | Die edge | 124: | Punch edge |
| 130: | Terrace | | |

Preferred examples of the Invention are specified in the following items:

### [Item 1]

A molding apparatus for molding a cup part of a pouch film, the molding apparatus comprising:
a die in which a first opening is defined;
a stripper disposed to fix the pouch film above the die and having a second opening at a position corresponding to the first opening;
an upper punch configured to press the pouch film through the second opening; and
a lower punch configured to press the pouch film through the first opening between an outer circumference of the upper punch and an inner circumference of the second opening.

### [Item 2]

The molding apparatus of item 1, wherein the lower punch is configured to primarily press the pouch film in a state in which the upper punch is disposed in the second opening, and
the upper punch is configured to secondarily press the pouch film in a state in which the lower punch is separated from the first opening.

### [Item 3]

The molding apparatus of item 2, wherein the upper punch is configured to press the pouch film to a depth at which the upper punch protrudes downward from the first opening.

### [Item 4]

The molding apparatus of item 1, wherein a top surface of the lower punch is provided to be convex.

### [Item 5]

A molding method for molding a cup part in a pouch film, the molding method comprising:
fixing the pouch film between a die, in which a first opening is formed, and a stripper, in which a second opening is formed;
allowing a lower punch to primarily press the pouch film through the first opening between an outer circumference of an upper punch and an inner circumference of the second opening; and
allowing the upper punch to secondarily press the pouch film downward through the second opening.

### [Item 6]

The molding method of item 5, wherein, in the primary pressing, the lower punch is inserted from the first opening into the second opening.

### [Item 7]

The molding method of item 5, wherein, in the secondary pressing, the lower punch is separated from the first opening.

### [Item 8]

The molding method of item 5, wherein, in the secondary pressing, the upper punch is inserted from the second opening into the first opening.

### [Item 9]

A pouch type battery case comprising:
a cup part having a recessed shape; and
a terrace disposed on a circumference of the cup part,
wherein a circumferential portion of the cup part comprises:
   a first circumferential portion connected to the terrace through a die edge;
   a second circumferential portion connected to the first circumferential portion and having a thickness less than that of the first circumferential portion; and
   a third circumferential portion connected to the second circumferential portion, connected to a base portion of the cup part through a punch edge, and having a thickness greater than that of the second circumferential portion.

### [Item 10]

The pouch type battery case of item 9, wherein the thickness of the first circumferential portion corresponds to the thickness of the third circumferential portion and/or a thickness of the die edge.

### [Item 11]

The pouch type battery case of item 9, wherein the thickness of the second circumferential portion and a thickness of the punch edge correspond to each other.

### [Item 12]

The pouch type battery case of item 9, wherein the thickness of the second circumferential portion is less than that of the die edge.

## Claims

1. A pouch type battery case comprising:
a cup part (120) having a recessed shape; and
a terrace (130) disposed on a circumference of the cup part,
wherein a circumferential portion (122) of the cup part (120) comprises:
a first circumferential portion (122a) connected to the terrace (130) through a die edge (123);
a second circumferential portion (122b) connected to the first circumferential portion (122a) and having a thickness less than that of the first circumferential portion (122a); and
a third circumferential portion (122c) connected to the second circumferential portion (122b), connected to a base portion (121) of the cup part (120) through a punch edge (124), and having a thickness greater than that of the second circumferential portion (122b).

2. The pouch type battery case of claim 1, wherein the thickness of the first circumferential portion (122a) corresponds to the thickness of the third circumferential portion (122c) and/or a thickness of the die edge (123).

3. The pouch type battery case of claim 1, wherein the thickness of the second circumferential portion (122b) and a thickness of the punch edge (124) correspond to each other.

4. The pouch type battery case of claim 1, wherein the thickness of the second circumferential portion (122b) is less than that of the die edge (123).

5. The pouch type battery case of claim 1, wherein a thickness of the punch edge (124) is less than a thickness of the die edge (123), the thickness of the first circumferential portion (122a), and the thickness of the third circumferential portion (122c).

6. The pouch type battery case of claim 1, wherein a thickness of the base portion (121) of the cup (120) is greater than each of the thicknesses of the first to third circumferential parts (122a, 122b, and 122c), a thickness of the die edge (123), and a thickness of the punch edge (124).
